# EUROPÄISCHE PATENTANMELDUNG

(11) **EP 1 075 902 A2**
(43) Veröffentlichungstag der Anmeldung: **14.02.2001**
(21) Anmeldenummer: 00115204.0
(22) Anmeldetag: 13.07.2000
(51) Int. Cl.: B25B 7/12

(54) **Zange zum mechanischen Bearbeiten von Werkstücken**

(30) Priorität: 21.07.1999 DE 19934288
(71) Anmelder: ECKOLD GmbH & Co. KG, 37444 St Andreasberg (DE)
(72) Erfinder: Kühne, Timm, 37441 Bad Sachsa (DE)
(74) Vertreter: Sparing - Röhl - Henseler Patentanwälte

(57) **Zusammenfassung**

Die Erfindung betrifft eine Zange zum mechanischen Bearbeiten von Werkstücken mit zwei Zangengliedern in Form zweiarmiger, zueinander drehbar gelagerter Hebel, an deren Arbeitsenden Werkzeuge befestigbar sind, wobei das eine Zangenglied einen feststehenden Zangengriff aufweist und einen Antriebskolben aufnimmt, dessen Stößel über einen wählbaren Vorhubweg gegen ein Antriebsende des anderen Zangengliedes verfahrbar ist, wodurch das Arbeitsende des anderen Zangengliedes entgegen einer Rückstellfeder auf das Arbeitsende des einen Zangengliedes zum Ausführen eines Arbeitshubes zubewegbar ist, wobei das andere Zangenglied (1) als Antriebsende (9) ein schwenkbar angelenktes, zum Stößel (27) ausrichtbares Distanzstück (11) aufweist, an dessen freiem Ende eine das Distanzstück (11) außerhalb eines Vorhubweges des Stößels (27) haltende Zugfeder (19) angreift und an dem mindestens ein Mitnehmerelement (22, 23) vorgesehen ist, das mit einem schwenkbaren Betätigungselement (24) in Eingriff steht, das das Distanzstück (11) entgegen der Zugfederkaft und unter Abstützung gegenüber dem einen Zangenglied (2) in den Vorhubweg des Stößels (27) schwenkbar ist unter Beabstandung der Antriebsenden (9, 10) und Annäherung der Arbeitsenden bis zu einer Schließstellung, und das einen Nocken (40) aufweist, der bei Erreichen der Schließstellung gegen einen Schalter (30) zum Auslösen des Arbeitshubes verfahrbar ist.

## Beschreibung

Die Erfindung betrifft eine Zange zum mechanischen Bearbeiten von Werkstücken nach dem Oberbegriff des Anspruchs 1.

Aus GB 20 74 487 A ist eine Zange zum Öffnen einer Flanschverbindung mit zwei Zangengliedem bekannt, die von zueinander drehbar gelagerten Hebeln gebildet werden. An einem Zangenglied greift der Stößel eines Antriebskolbens an, während das andere Zangenglied starr am Antriebskolben befestigt ist. Mittels eines Betätigungshebels ist ein Arbeitshub auslösbar, durch den das erste Zangenglied gegen das feststehende Zangenglied verfahrbar ist.

Aus EP 0 299 477 A1 ist ein hydraulisch betätigtes Handgerät, wie eine Zange oder Schere, zum Schneiden und/oder Verformen von Gegenständen aus hoch-festem Material mit einem Hydrauliksystem mit nachgeschaltetem Druckmittel-Arbeitszylinder bekannt, in dem ein das Werkzeug bewegender Druckkolben verschiebbar ist, und wobei das Druckmittel mittels eines mit einem Steuerkolben gekuppelten Handhebels in den Arbeitszylinder gepumpt wird. Der Druckkolben bewegt sich dabei nach außen und drückt damit die beiden Zangenhebel mit ihren Scherenflächen oder dergleichen gegeneinander. Mit dem Aneinanderdrücken der Scherenflächen oder dergleichen wird das angelegte Werkstück, z.B. ein Bolzen, ein Rohr, zertrennt oder verformt.

Zangen nach dem Oberbegriff des Anspruchs 1, die als ein mobiles Werkzeug manuell zu einem Bauteil geführt werden können, werden seit vielen Jahren bei der Blechbearbeitung eingesetzt. Die Ausbildung als Handgerät birgt jedoch die Gefahr, daß die Hand oder einzelne Finger einer Bedienungsperson zwischen die Arbeitsenden der Zangenglieder einer geöffneten Zange gelangen und dort bei einem anschließenden Arbeitshub abgequetscht werden.

Aus DE 195 42 068 A1 ist eine pneumatisch betriebene Handzange bekannt, bei der ein von beweglichen Zangenbacken gebildetes Zangenmaul sich dadurch auszeichnet, daß das Zangenmaul in seiner Offenstellung durch einen beweglichen in ihm aufgenommenen Verdrängungskörper, beispielsweise eine Blattfeder, verschlossen wird, um dem unbeabsichtigten Eindringen von Fremdkörpern vorzubeugen. Damit wird insbesondere einer Verletzungsgefahr durch in das Zangenmaul geratende Finger der Bedienungsperson vorgebeugt.

Es ist ferner bekannt, eine gattungsgemäße Zange zunächst von Hand soweit zu schließen, daß einzelne Finger einer Bedienungsperson nicht mehr zwischen die Arbeitsenden der Zangenglieder passen, und dann den eigentlichen Arbeitshub des Antriebskolbens auszulösen. Bei der Eckold Druckfügezange EMF 30/3L ist dazu ein Distanzstück vorgesehen, das beim Verschließen der Zange zwischen das Antriebsende des beweglichen Zangenschenkels und dem Stößel des Antriebskolbens geschwenkt wird, so daß erst eine Übertragung des Arbeitshubes des Stößels auf den beweglichen Zangenschenkel möglich ist, wenn eine Kraftübertragungskette geschlossen ist. Solange die Zange nicht geschlossen ist, würde ein aktivierter Arbeitshub des Antriebskolbens nicht zu einer Berührung zwischen Stößel und Zangenschenkel führen, da die Länge des Arbeitshubs zu kurz ist, um den Zangenschenkel zu erreichen.

Als nachteilig hat sich jedoch erwiesen, daß das Einschwenken des Distanzstückes einen zusätzlichen zweiten Handgriff erfordert, wodurch zumindest zeitweise beide Hände zur Bedienung der Zange benötigt werden. Die Bedienung wird dadurch erschwert.

Aufgabe der Erfindung ist es daher, eine Zange nach dem Oberbegriff des Anspruchs 1 zu schaffen, die eine reine Einhandbedienung ermöglicht.

Diese Aufgabe wird durch die Merkmale des kennzeichnenden Teils des Anspruchs 1 gelöst.

Hierdurch wird eine Zange geschaffen, die mit demselben Betätigungselement eine manuelle Schließbewegung und die anschließende Auslösung des Krafthubes realisiert. Eine solche Zange kann ausschließlich mit einer Hand und ohne jegliches Umgreifen bedient werden. Ferner kann eine solche Zange ein vergleichsweise großes Öffnungsmaß zwischen einem Ober- und einem Unterwerkzeug der Zange bieten, woraus ein erweitertes Einsatzspektrum hinsichtlich der zu bearbeitenden Werkstückbereiche folgt.

In Verbindung mit der Ausbildung des Distanzstückes als einarmiger Hebel, dessen freies Ende an eine Zugfeder gekoppelt ist, wird eine Auskopplung des Distanzstückes aus der Kraftübertragungskette sichergestellt. Nur bei Anwendung einer die Zugkraft der Zugfeder überwindenen Gegenkraft wird eine Einkopplung des Distanzstückes in die Kraftübertragungskette ermöglicht.

Die Einkopplung des Distanzstückes kann zudem ausschließlich dann gewährleistet sein, wenn eine Bedienungsperson einen Einhandbedienhebel fest gedrückt hält. Im Falle eines leichten Nachlassens der Bedienkraft kann vorgesehen sein, daß das Distanzstück selbst während des Arbeitshubes wieder aus der Kraftübertragungskette herausgezogen wird, wodurch der Arbeitshub abgebrochen wird. Dies bedeutet zusätzliche Sicherheit, da nach einem Auslösen eines Arbeitshubes eine Beendigung des Arbeitsvorganges nicht zwangsläufig erfolgen muß.

Das Betätigungselement kann nach Art eines Abzuges am Zangengriff bedienbar sein, um das Distanzstück entgegen der Zugfederkraft einzukoppeln. Ebenso kann ein Druckpunkt in den Betätigungsweg des Betätigungselementes eingearbeitet werden, der die erfolgte Einkopplung des Distanzstückes in die Kraftübertragungskette zwischen Stößel und schwenkbarem Zangenglied anzeigt und als Ankündigung der bevorstehenden Arbeitshubs-Auslösung dient.

Weitere Ausgestaltungen der Erfindung sind der nachfolgenden Beschreibung und den Unteransprüchen zu entnehmen.

Die Erfindung wird nachfolgend anhand des in den beigefügten Abbildungen dargestellten Ausführungsbeispiels beschrieben.
Fig. 1 zeigt in teilgeschnittener Seitenansicht eine Zange im geöffneten Zustand,
Fig. 2 zeigt die Zange gemäß Fig. 1 im geschlossenen Zustand vor einem Auslösen eines Arbeitshubes,
Fig. 3 zeigt die Zange gemäß Fig. 1 im geschlossenen Zustand am Ende eines Arbeitshubes,
Fig. 4 ist eine Ansicht A der Fig. 3.

Die Erfindung betrifft eine Zange zum mechanischen Bearbeiten von Werkstücken, insbesondere eine Zange zum Scheren, Schneiden, Stanzen, Lochen, Nieten und Durchsetzfügen von Blechen, Rohren und Profilen mit dem nachstehend beispielhaft für eine Zange beschriebenen Aufbau.

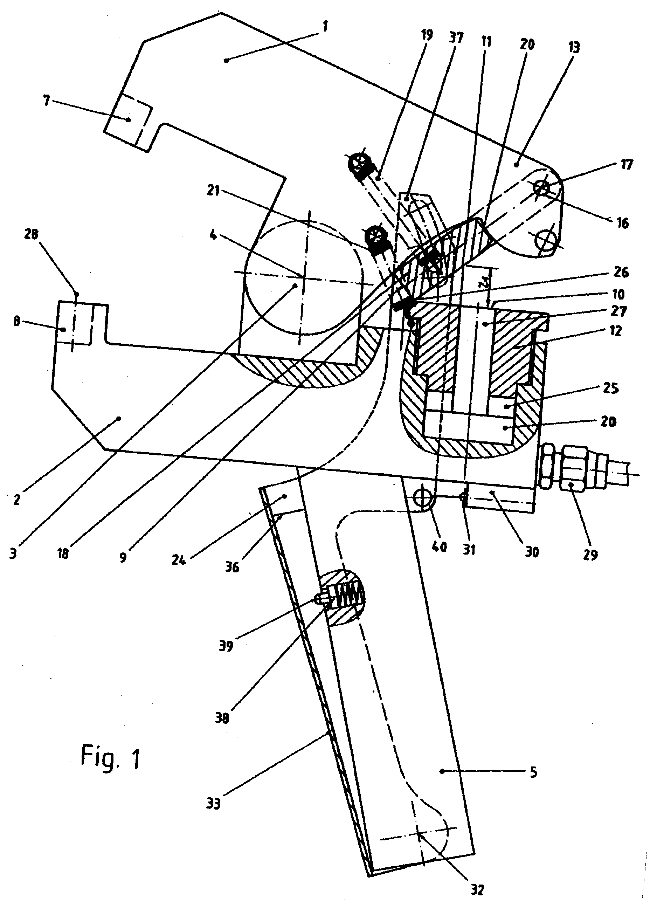

Die Figuren 1 bis 4 zeigen eine Zange mit einem ersten Zangenglied 1 und einem zweiten Zangenglied 2, die jeweils als zweiarmige Zangenschenkel ausgebildet und über ein Zangengelenk 3 schwenkbar um die Achse 4 miteinander verbunden sind. Am Zangenglied 2 ist dabei feststehend ein Zangengriff 5 angebracht. Das Zangenglied 2 bezeichnet man daher auch vielfach als das feststehende Zangenglied 2, während das Zangenglied 1 als das bewegliche Zangenglied 1 bezeichnet wird.

Die Zangenglieder 1, 2 besitzen jeweils ein Arbeitsende 7, 8 an dem ein Werkzeug in einem Werkzeugnest befestigbar ist und jeweils ein handgriffseitiges hinteres Ende. Als Werkzeuge werden insbesondere Stempel und Matrize eingesetzt. Mittels einer Rückstellfeder 21, die an beiden Zangengliedern 1, 2 angreift, vorzugsweise an den den Arbeitsenden gegenüberliegenden Hebelarmen der zweiarmigen Zangenglieder 1, 2, werden die Arbeitsenden 7, 8 geöffnet gehalten und können nur entgegen der Rückstellkraft der Feder 21 angenähert werden.

Die Zangenglieder 1, 2 besitzen ferner jeweils ein den Arbeitsenden 7, 8 gegenüberliegendes Antriebsende 9, 10, das bei dem Zangenglied 1 von dem Distanzstück 11 und bei dem Zangenglied 2 von einer Stirnseite eines Stößels 27 gebildet wird. Das Distanzstück 11 ist, wie aus den Fig. 1 bis Fig. 3 ersichtlich ist, schwenkbar an einem hinteren Ende 13 des beweglichen Zangenglieds 1 befestigt. Dazu besitzt das Distanzstück 11 seitliche Laschen 14, 15, die beidseitig an dem hinteren Ende 13 mittels eines Befestigungsbolzens 16 befestigt sind, der eine Schwenkachse 17 definiert. Das Distanzstück 11 stellt einen einarmigen Hebel dar, der einen Verlängerungsarm des Zangenglieds 1 bildet.

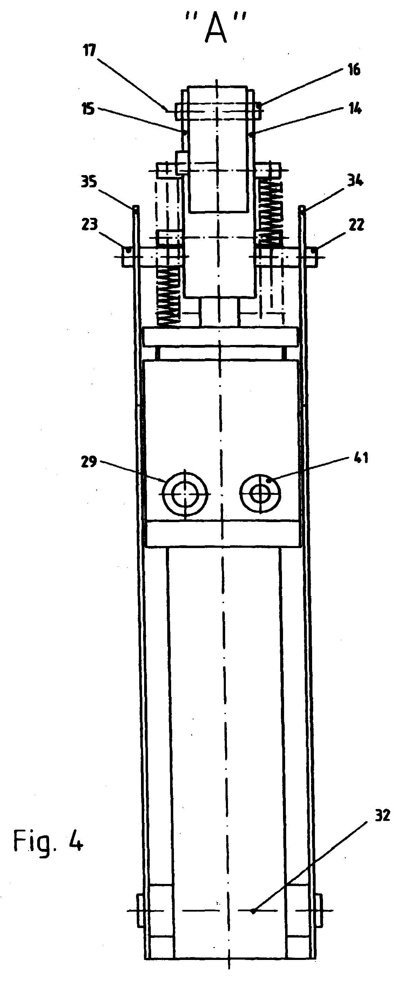

An einem freien Ende 18 des Distanzstückes 11 greift eine Zugfeder 19 an, deren anderes Ende an dem oberen Zangenglied 1 befestigt ist. Die Zugkraft der Zugfeder 19 bewirkt, daß das Distanzstück 11 an das Zangenglied 1 und somit in einen Innenraum der Zange gezogen wird. An dem Distanzstück 11 ist ferner mindestens ein Mitnehmerelement 22, vorzugsweise zwei Mitnehmerelemente 22, 23 (vgl. Fig. 4), vorgesehen, an dem ein Betätigungselement 24 angreift, dessen Umriß dargestellt ist und nachfolgend noch im einzelnen beschrieben wird. Alternativ kann das Betätigungselement 24 ohne eine Zwischenschaltung von Mitnehmerelementen direkt an dem Distanzstück 11 angreifen.

Das Distanzstück 11, das in Fig. 1 aus dem Kraftfluß ausgekoppelt dargestellt ist, wird von der Zugfeder 19 außerhalb eines Vorhubweges eines Stößels 27 positioniert, wobei die Rückstellfeder 21, das Zangenglied 1 zusammen mit dem Distanzstück 11 gegen den dem Arbeitsende 8 abgewandten Hebelarm mit einer den Stößel außenseitig begrenzenden Stellschraube 12 zieht, bis das Distanzstück auf die Stellschraube 12 des Zangenglieds 2 trifft (die Stelle ist mit 26 gekennzeichnet), das insoweit einen Anschlag bildet.

Das Zangenglied 2 weist an dem dem Arbeitsende 8 abgewandten Hebelarm einen Antriebskolben 20 auf, dessen Stößel 27 in einer Richtung parallel einer Werkzeugachse 28 einen Vorhubweg als Arbeitshub besitzt. Der Vorhub des Antriebskolbens wird durch ein unteres Ende der Stellschraube 12 begrenzt und ist durch diese wählbar. Die Beaufschlagung des Antriebskolbens 20 kann pneumatisch oder hydraulisch erfolgen, wozu ein Antriebsmediumanschluß 29 vorgesehen ist. Das Zangenglied 2 weist ferner einen Schalter 30 auf. Bei einer Betätigung des Tasters 31 wird der Vorhub des Antriebskolbens 20 ausgelöst. Nach Aufhebung dieser Betätigungskraft setzt ein Rückhub des Antriebskolbens 20 ein.

Zum Einkoppeln des Distanzstückes 11 in einen Vorhubweg des Stößels 27, um eine Kraftübertragungskette zwischen dem Stößel 27 und dem beweglichen Zangenglied 1 zu schaffen, ist das schwenkbar am Zangengriff 5 angelenkte Betätigungselement 24 vorgesehen. Das Betätigungselement 24 ist am Griffende des Zangengriffs 5 schwenkbar um die Achse 32 gelagert. Gebildet wird das Betätigungselement 24 von einer Zangengriffschale 33, die als ein einseitiger Hebel am Zangengriffende schwenkbar gelagert ist und mindestens einen Betätigungsarm 34, 35 aufweist, der direkt oder über mindestens ein am Distanzstück 11 befestigtes Mitnehmerelement 22, 23 derart in Eingriff gebracht ist, daß die am Distanzstück 11 angreifende Zugfeder 19 die Zangengriffschale 33 gegenüber dem Zangengriff 5 federvorgespannt abwinkelt. Der oder die Betätigungsarme 34, 35 können als seitlich an dem einen Zangenglied 2 vorbeigeführte Schwerter ausgebildet sein. Solche schwerterförmigen Betätigungsarme 34, 35 können eine Außenkontur aufweisen, die so gewählt ist, daß die die Antriebsenden der Zangenglieder 1, 2 umgebende Antriebsmechanik manuell nicht hintergreifbar seitlich abgedeckt ist.

Wird die Zangengriffschale 33 in Pfeilrichtung 36 gegen den Zangengriff 5 gedrückt, folgen der oder die Betätigungsarme 34, 35 als fest mit der Zangengriffschale 33 verbundene Teile dieser Bewegung und schwenken entgegen der Zugkraft der Zugfeder 19. Dadurch wird das Distanzstück 11, drehbar fixiert an dem hinteren Ende 13 des Zangengliedes 1, in den Vorhubweg des Stößels 27 geschwenkt, wobei die Abwinklung der Zangengriffschale 33 derart gewählt ist, daß deren Schwenkweg zur vollständigen Einkopplung des Distanzstückes 11 führt. Beim Schwenken des Distanzstückes 11 in den Vorhubweg des Stößels 27 stützt sich dieses mit seinem unteren Ende, das das Antriebsende 9 des Zangenglieds bildet, am oberen Ende der in das Zangenglied 2 eingebrachten Stellschraube 12 ab. An dem Antriebsende 10 kann hierfür eine Führungsbahn vorgesehen sein. Das in den Figuren als oberes Ende der Stellschraube 12 erkennbare Ende kann hierfür eine von einer Ebene abweichende Oberfläche aufweisen.

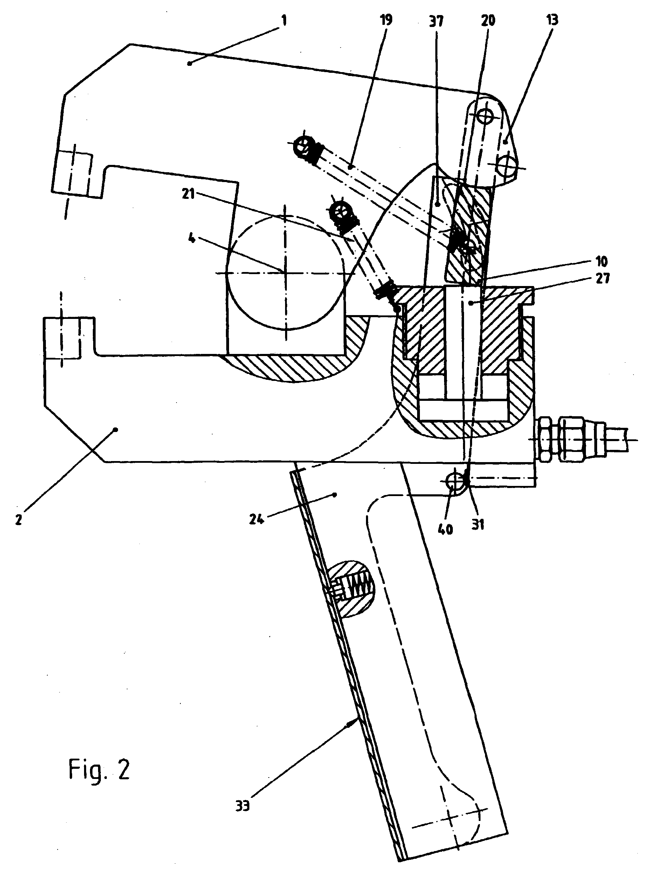

Durch das Schwenken des Distanzstückes 11 in den Vorhubweg des Stößels 27, stellt sich dieses auf und vergrößert seine Länge in Richtung des Vorhubweges des Stößels 27, wodurch sich entgegen der Kraft der Rückstellfeder 21 das Zangenglied 1 mit seinem Antriebsende 9 auf das Antriebsende 10 des Zangengliedes 2 stellt und die Arbeitsenden 7, 8 sich annähern (vgl. Fig. 2).

Die Länge des Distanzstückes 11 bei seiner Ausrichtung zur Vorhubrichtung des Stößels 27 kann derart gewählt werden, daß die Arbeitsenden 7, 8 sich bis zu einer Schließstellung gemäß Fig. 2 ausschließlich durch Wirkung einer Handkraft annähern. Eine solche Schließstellung liegt beispielsweise vor, wenn die von den Arbeitsenden 7, 8 aufgenommenen Werkzeuge sich bis auf 6 mm angenähert haben.

Die von dem Distanzstück 11 ausgeführte Schwenkbewegung wird also begleitet von einer Schwenkbewegung des Zangengliedes 1, an dem das Distanzstück 11 befestigt ist und somit die manuelle Schließbewegung verwirklicht. Das Distanzstück 11 wird dabei aufgestellt. Damit diese kombinierte Bewegung durch Betätigung des Betätigungselementes 24 möglich ist, weist das Betätigungsorgan 24 mindestens einen Betätigungsarm 37 für die direkte oder über Mitnehmerelemente 22, 23 vermittelte Betätigung des Distanzstückes 11 auf.

Schließlich ist an dem Betätigungselement 24 ein Nocken 40 vorgesehen, der am Ende der Schließbewegung gegen einen Schalter 30 verfährt, der den Vorhub des Stößels 27 und somit den eigentlichen Arbeitshub für beispielsweise eine Fügung auslöst.

Durch ein Aufheben der am Betätigungselement 24 aufgebrachten Betätigungskraft, d.h. die Zangengriffschale 33 bewegt sich entgegen der Pfeilrichtung 36, kann dieses durch Druckkraft mindestens eines Federelementes 38, 39 eine Drehbewegung um die Lagerachse 32 ausführen, wodurch der Nocken 40 den Schalter 30 freigibt und somit einen Rückhub des Stößels 27 auslöst. Nach dem Aufheben der von dem Betätigungselement 24 auf das Distanzstück 11 übertragenen, manuellen Schließkraft kann durch die Zugkraft des Federelementes 19 das Distanzstück 11 vom Stößel 27 weg in Richtung der Lagerachse 4 der Zangenglieder 1, 2 bewegt und an einem inneren Bereich des Zangengliedes 1 positioniert werden. Ferner wird durch die Zugkraft eines Federelementes 21 das andere Zangenglied 1 gegenüber dem einen Zangenglied 2 derart um die gemeinsame Lagerachse 4 gedreht, daß sich die Antriebsenden der Zangenglieder 1, 2 annähern, wodurch die Zange in ihre Öffnungsstellung (gemäß Fig. 1) fährt.

Mittels des Federelements 38, 39 kann beim Andrücken der Zangengriffschale 33 an den Zangengriff 5 kurz bevor das Betätigungselement 24 den Nocken 40 gegen den Schalterstift 31 fährt, eine zusätzliche Druckkraft auf das Betätigungselement 24 aufbringt.

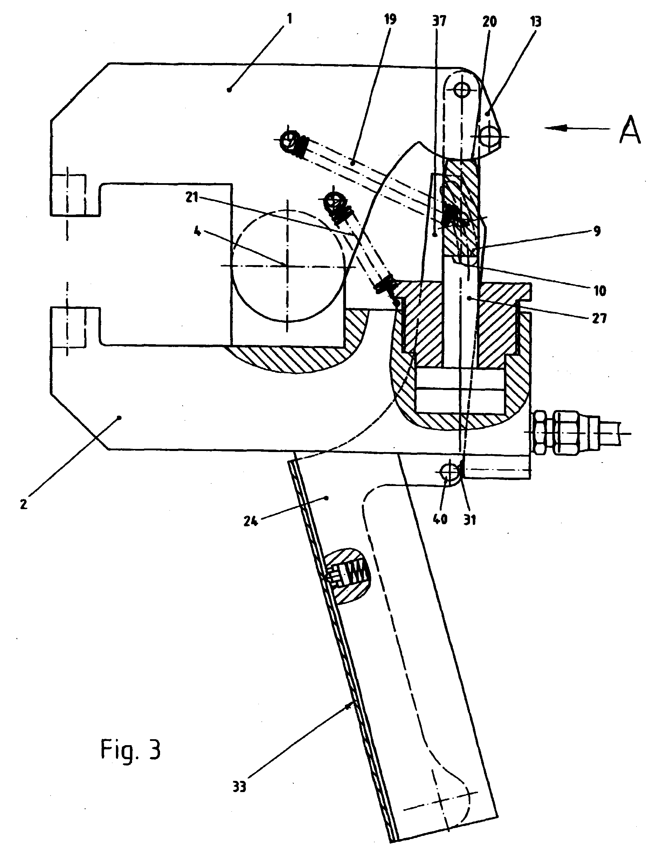

Fig. 3 zeigt die vorstehend beschriebene Druckfügezange am Ende des Arbeitshubes. Das Distanzstück 11 schließt die Kraftübertragungskette und der Stößel 27 ist um seinen maximalen Vorhub ausgefahren. Der Stößel 27 besitzt dabei eine Hubachse, die parallel zur Längsachse eines im Zangenglied 2 befestigbaren Werkzeuges liegt.

## Patentansprüche

1. Zange zum mechanischen Bearbeiten von Werkstücken mit zwei Zangengliedern in Form zweiarmiger, zueinander drehbar gelagerter Hebel, an deren Arbeitsenden Werkzeuge befestigbar sind, wobei das eine Zangenglied einen feststehenden Zangengriff aufweist und einen Antriebskolben aufnimmt, dessen ein Antriebsende bildender Stößel über einen wählbaren Vorhubweg gegen ein Antriebsende des anderen Zangengliedes verfahrbar ist, wodurch das Arbeitsende des anderen Zangengliedes entgegen einer Rückstellfeder auf das Arbeitsende des einen Zangengliedes zum Ausführen eines Arbeitshubes zubewegbar ist, **dadurch gekennzeichnet**, daß das andere Zangenglied (1) als Antriebsende (9) ein schwenkbar angelenktes, zum Stößel (27) ausrichtbares Distanzstück (11) aufweist, an dessen freiem Ende eine das Distanzstück (11) außerhalb eines Vorhubweges des Stößels (27) haltende Zugfeder (19) angreift und an dem mindestens ein Mitnehmerelement (22, 23) vorgesehen ist, das mit einem schwenkbaren Betätigungselement (24) in Eingriff steht, das das Distanzstück (11) entgegen der Zugfederkaft und unter Abstützung gegenüber dem einen Zangenglied (2) in den Vorhubweg des Stößels (27) schwenkbar ist unter Beabstandung der Antriebsenden (9, 10) und Annäherung der Arbeitsenden (7, 8) bis zu einer Schließstellung, und daß das Betätigungselement (24) einen Nocken (40) aufweist, der bei Erreichen der Schließstellung zum Auslösen des Arbeitshubes gegen einen Schalter (30) verfahrbar ist.

2. Zange nach Anspruch 1, dadurch gekennzeichnet, daß der Stößel (27) eine Hubachse besitzt, die parallel zur Längsachse eines im Zangenglied (2) befestigten Werkzeuges liegt.

3. Zange nach Anspruch 1 oder 2, dadurch gekennzeichnet, daß das Distanzstück (11) eine Länge aufweist, die in Abhängigkeit von einer vorgebbaren Annäherung der Arbeitsenden (7, 8) in der Schließstellung wählbar ist.

4. Zange nach einem der Ansprüche 1 bis 3, dadurch gekennzeichnet, daß das Distanzstück (11) als ein am Zangenglied (1) drehbar gelagerter Verlängerungsarm ausgebildet ist.

5. Zange nach Anspruch 4, dadurch gekennzeichnet, daß dem freien Ende des Distanzstücks (11) eine Abstützfläche an einer mit dem eine Zangenglied (2) verbundenen Stellschraube (12) zugeordnet ist, auf der sich das freie Ende des Distanzstückes (11) beim Schwenken aus und beim Schwenken in den Vorhubweg des Stößels (27) gleitend abstützt.

6. Zange nach einem der Ansprüche 1 bis 5, dadurch gekennzeichnet, daß die an dem Distanzstück (11) angreifende Zugfeder (19) mit ihrem anderen Ende an dem anderen Zangenglied (1) angreift zum Auskoppeln des Distanzstückes (11) aus einer Kraftflußkette.

7. Zange nach einem der Ansprüche 1 bis 6, dadurch gekennzeichnet, daß das Betätigungselement (24) von einer Zangengriffschale (33) gebildet wird, die an einem Ende als ein einseitiger Hebel am Zangengriffende schwenkbar gelagert ist und am anderen Ende über mindestens einen Betätigungsarm (34, 35) an dem Distanzstück (11) angreift.

8. Zange nach Anspruch 7, dadurch gekennzeichnet, daß die von dem mindestens einen Betätigungsarm (34, 35) einleitbare Kraft unmittelbar auf das Distanzstück (11) übertragbar ist.

9. Zange nach Anspruch 7, dadurch gekennzeichnet, daß die von dem mindestens einen Betätigungsarm (34, 35) einleitbare Kraft über mindestens ein Mitnehmerelement (22, 23) auf das Distanzstück (11) übertragbar ist.

10. Zange nach Anspruch 9, dadurch gekennzeichnet, daß der mindestens eine Betätigungsarm (34, 35) als seitlich am einen Zangenglied (2) vorbeigeführtes Schwert ausbildbar ist.

11. Zange nach Anspruch 10, dadurch gekennzeichnet, daß die schwerterförmigen Betätigungsarme (34, 35) eine Außenkontur aufweisen, welche die die Antriebsenden der Zangenglieder (1, 2) umgebende Antriebsmechanik manuell nicht hintergreifbar seitlich abdeckt.

12. Zange nach einem der Ansprüche 1 bis 11, dadurch gekennzeichnet, daß das Betätigungselement (24) eine Zangengriffschale (33) umfaßt, die gegenüber einem Ende des Zangengriffs (5) abwinkelbar ist

13. Zange nach Anspruch 12, dadurch gekennzeichnet, daß eine Zangengriffschale (33) nach Art eines Abzuges gegen eine Federkraft an den Zangengriff (5) drückbar ist.

14. Zange nach einem der Ansprüche 1 bis 13, dadurch gekennzeichnet, daß der Zangengriff (5) mindestens ein federvorgespanntes Abstützelement (38) aufweist, das als eine Anzeigevorrichtung für eine kurz bevorstehende Freigabe des Schalters (30) eine Druckkraft zwischen dem Zangengriff (5) und dem Betätigungselement (24) erzeugt.

15. Zange nach einem der Ansprüche 1 bis 14, dadurch gekennzeichnet, daß die an dem Arbeitsende befestigbaren Werkzeuge als Stempel und Matrize ausbildbar sind.

16. Zange nach einem der Ansprüche 1 bis 15, dadurch gekennzeichnet, daß der Antriebskolben (20) hydraulisch oder pneumatisch betätigbar ist.

17. Zange nach einem der Ansprüche 1 bis 16, dadurch gekennzeichnet, daß die Zangenglieder (1, 2) eine Öffnungsweite definieren, die größer ist als der Vorhubweg des Stößels (27).
